# EUROPEAN PATENT SPECIFICATION

(11) **EP 0 275 671 B1**
(45) Date of publication and mention of the grant of the patent: **11.08.1993**
(21) Application number: 87311084.5
(22) Date of filing: 16.12.1987
(51) Int. Cl.: B01J 37/00, B01J 37/08, B01D 53/36

(54) **Process for calcining a denitrating catalyst**
Verfahren zur Kalzinierung eines Denitrierungskatalyators
Procédé de calcination d'un catalyseur de dénitrification

(30) Priority: 19.12.1986 JP 303200/86
(43) Date of publication of application: 27.07.1988
(73) Proprietor: BABCOCK-HITACHI KABUSHIKI KAISHA, Tokyo 100 (JP)
(72) Inventor: Ishida, Nobuyoshi Kure Works, Kure-shi Hiroshima-ken (JP); Michimoto, Takashi Kure Works, Kure-shi Hiroshima-ken (JP); Miyake, Katsutaro Kure Works, Kure-shi Hiroshima-ken (JP); Ichige, Toshio Kure Works, Kure-shi Hiroshima-ken (JP)
(74) Representative: Pendlebury, Anthony

(56) References cited:
- DE-A- 2 504 027
- FR-A- 916 273
- FR-A- 2 284 368
- FR-E- 57 146
- US-A- 2 565 977
- PATENT ABSTRACTS OF JAPAN, vol. 2, no. 152, 20th December 1978, page 3618 C 78; & JP-A-53 118 287 (UBE KOSAN K.K.) 16-10-1978

## Description

This invention relates to a process for calcining a denitrating catalyst and more particularly it relates to a process for calcining a denitrating catalyst suitable for obtaining a denitrating cayalyst having a uniform performance.

Catalysts which are used for the denitration of exhaust gases (e.g. by reducing with ammonia the nitrogen oxides contained in the exhaust gases) are typically those composed mainly of oxides of metals such as titanium, vanadium, molybdenum, etc. When these metal oxides are molded as they are, the resulting molded project has a low strength. for this reason it has been proposed to apply the catalytic substance onto both of the surfaces of a porous plate support as a core material to form a plate catalytic (US-A-4,567,630).

In one example of the preparation of the catalyst, a raw material slurry or a catalyst substance is heat-kneaded, followed by extrusion-granulation, drying, precalcination, milling, thereafter adding water and a filler, kneading the mixture in a pasty state, applying the resulting material onto a plate expanded metal, contact-bonding these, processing the resulting material into a plate shape having Z-form projections in the cross-section, cutting and air-drying. The resulting plate catalyst elements are calcined and then impregnated with another catalytic component, if necessary, and stacked within a frame body to form a catalyst unit. This catalyst unit is then subjected to final calcination to form a product.

Furnaces known as hot air-circulating furnaces have been used as calcining furnaces in the above-mentioned calcination. In these furnaces, hot air is circulated in only one direction through the catalyst units arranged on a truck.

However, such furnaces have raised such problems that the performance of the product obtained after the calcination(s) is not constant; in particular, the catalyst on the inlet side of the hot air furnace and that on the exit side thereof have an inferior quality to make it impossible to use such catalysts; the available volume of the hot air furnace is reduced; the energy loss increases; and further a long calcination time is required.

The object of the present invention is to provide a process for calcining a denitrating catalyst, capable of producing a uniform catalyst having superior percentage denitration and mechanical properties by calcining a catalyst unit, preferably obtained by stacking catalyst plates within a frame body, in a hot air furnace uniformly irrespective of the location of the catalyst in the furnace.

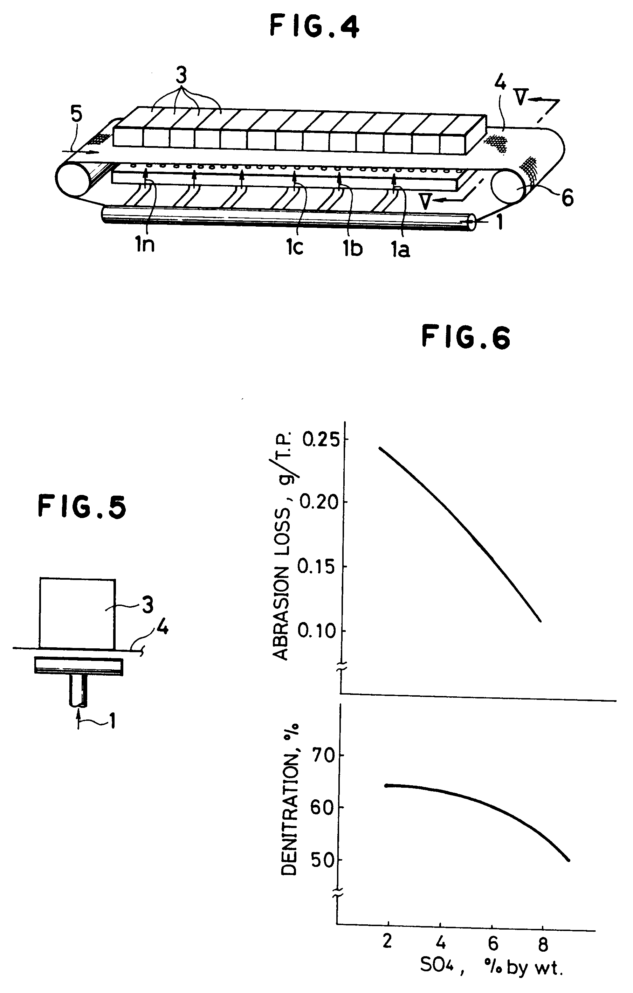

Accordingly, the present invention provides a process for calcining a denitrating catalyst, which process comprises arranging denitrating catalyst units on a reticulated belt which is moving continuously through a furnace; passing fresh hot air through the said units, the temperature of the hot air being from 350°C to 600°C and the direction of the flow of hot air which is passing through the catalyst units at least at the upstream portion of the reticulated belt being opposite to the direction of the flow of hot air which is passing through the catalyst units at the downstream portion of the reticulated belt; and removing the resulting catalyst units from the reticulated belt; the sulfate group content in the resultant catalyst being brought to a value of from 4 to 7% by weight, based on the weight of the catalyst, by adjusting the rate of passage of the hot air through the units to a value of from 0.1 to 0.9 m/sec with the retention time of the catalyst units in the furnace being from 1 to 4 hours
The present inventors have investigated the reasons why calcination of the catalyst cannot be uniformly carried out when a conventional calcining furnace using hot air circulation is employed. They have found that sulfate groups remaining in the catalyst have a large influence upon the quality of the catalyst. Namely it has been noted that since oxides of metals such as titanium, vanadium, molybdenum, tungsten and manganese etc. as a raw material for the catalyst are added in the form of their sulfates or their sulfuric acid solution, sulfate groups are present in the resulting catalyst composition an the percentage denitration and mechanical properties of the catalyst are affected by the content of sulfate groups ultimately remaining in the catalyst. Fig. 6 of the accompanying drawings shows the relationship between the quantity (% by weight) of SO₄ in the catalyst and the abrasion (or erosion) loss and the percentage denitration of the catalyst. As the content of SO₄ increases, the abrasion loss and the percentage denitration decreases. It is noted that there is an optimum range for the content of SO₄ in the catalyst in order to obtain a catalyst which satisfies both properties of denitration and abrasion resistance. In view of these facts, it can be seen that a catalyst having a high quality and a uniform performance can be obtained generally by adjusting the content of SO₄ groups in the catalyst to a range of 4 to 7% by weight, preferably 5 to 6% by weight.

In the present invention, the direction of passage of fresh hot air at the front part and the rear part of a continuously moving reticulate belt is reversed midway through the calcination. For example the hot air is fed from below in an upward direction at the front part of the reticulate belt, and then in the opposite direction from above in a downward direction at the rear part of the belt. The catalyst units arranged on the belt are raised up to a definite temperature and heat-treated at first by blowing fresh hot air fed from a hot air-feeding means provided below the belt through the inside of the catalyst layer from below in an upward direction. Midway during the calcination process, the catalyst units move with the movement of the belt to a position at which a hot air-feeding means is provided, where the next process is carried out, i.e. the catalysts are heat-treated by fresh hot air blowing through the catalyst layer from above in a downward direction. In such a manner, as the belt moves continuously, the catalysts are almost uniformly calcined or heat-treated during the passage through the sections where fresh hot air-feeding means are provided above and below the belt.

When hot air is passed through the catalyst units from only one side thereof, (i.e. it flows always only in one direction), the calcination becomes non-uniform towards the flow direction of hot air. Even when hot air is passed only in one direction, catalyst calcination is possible, but the catalyst performance on the inlet side of hot air is different from that one the exit side thereof (i.e. high activity and low strength on the inlet side of hot air, with low activity and high strength on the exit side thereof). This is because the content of sulfate groups in the catalyst relates to the performance of the catalyst. As the catalyst temperature on the upstream side of hot air rises, the sulfate group content on the upstream side begins to fall off in advance and the sulfate group separated from the surface of the catalyst gradually flows towards the downstream side of hot air and adheres onto the downstream catalyst; hence there is a tendency that the content of the remaining sulfate groups on the upstream side of hot air is low while that one the downstream side thereof is high to make the catalyst performance non-uniform.

In the present invention, the above-mentioned hot air should be fresh. If used hot air is recycled, sulfuric acid separated from the catalyst again adheres to the catalyst, and particularly the content of sulfate groups in the catalyst on the inlet side of hot air increases to make the quality of the catalyst non-uniform. The preferred conditions to be used for the hot air in the furnace for calcining the catalyst and at the same time for adjusting the content of sulfate groups in the catalyst to a value within a preferable range are as follows:
a hot air temperature of 350°C to 600°C, preferably 450°C to 550°C; a hot air rate of 0.1 to 0.9 m/sec, preferably 0.3 to 0.5 m/sec; and a retention time of the catalyst in the furnace of 1 to 4 hours, preferably 2 to 3 hours. By selecting these conditions, the content of sulfate groups in the catalyst is adjusted to 4 to 7% by weight, preferably 5 to 6% by weight based on the weight of the catalyst.

If the hot air temperature is too low or the hot air rate is too low, a long calcination temperature is required, while if the hot air temperature is too high or the hot air rate is too large, cracks in the catalyst often occur.

The present invention will now be described in more detail by way of example only, with reference to the accompanying drawings, in which:-
Fig. 1 shows a perspective view illustrating an embodiment of the catalyst-calcining furnace employed in the process of the present invention.
Fig. 2 shows a plan view illustrating another embodiment of the present invention.
Fig. 3 shows a perspective view illustrating a denitration plate catalyst unit.
Fig. 4 shows a perspective view illustrating a catalyst-calcining furnace in comparison with the present invention.
Fig. 5 shows a side view of the furnace of Figure 4 as viewed from the directional line V-V shown in Fig. 4.
Fig. 6 shows two graphs illustrating the respective relationships between SO₄ content in the catalyst and the percentage denitration and the abrasion loss of the catalyst.

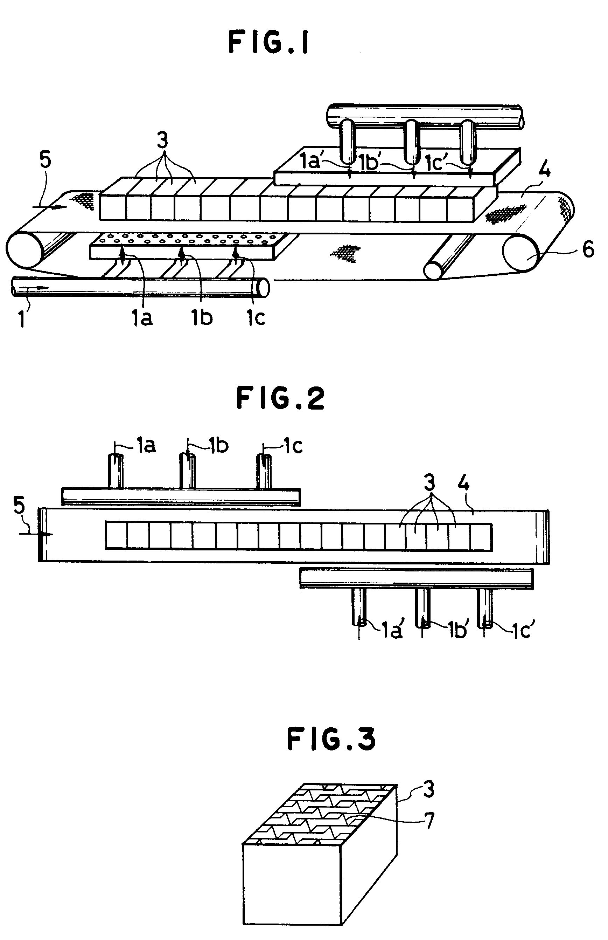

Fig. 1 shows a perspective view of a plate catalyst-calcining furnace illustrating an embodiment of a furnace used for the present invention. The plate catalyst units 3 arranged on a reticulate belt 4 are prepared by applying the denitrating catalyst onto a porous plate support having projections, stacking the resulting plate catalysts 7 by means of the projections and encasing the resulting stacked plate catalysts in a frame body as shown in Fig. 3. The catalyst units 3 are arranged on the reticulate endless belt 4 which is suspended on a pair of rolls 6, so that the flow direction of fresh hot air can be upward and downward as shown in Fig. 1, and a stream of fresh hot air (1) which is divided into fresh hot air 1a, 1b... 1n is blown from below in an upward direction at the front part of the reticulate belt 4 which advances in the direction shown by arrow 5, whereby the plate catalyst units 3 are raised in temperature, the thus raised temperature is kept to calcine the units. Midway during the calcination, as the reticulate belt 4 moves, the catalyst units 3 move to a position where another fresh hot air stream 1ʹ which is divided into a 1aʹ, 1bʹ, 1cʹ is fed from above the catalyst units in a downward direction and the temperature is further kept to effect calcination. The units are then removed after completion of the calcination. As to the loading manner and arrangement of the plate catalyst units 3, the units may be arranged so that hot air can be passed through the inside of the catalyst layer. In the above embodiment, fresh hot air is fed in an upwardly direction at the front part of the reticulate belt 4, while it is fed in a downwardly direction at the rear part thereof. However, even when fresh hot air is fed in a downward direction at the front part of the belt while it is fed in an upward direction at the rear part, the same calcination effect is obtained. In Fig. 1, parts such as walls, ceilings, etc. are not shown, but actually, the housings for the flow of the hot air are made so as to form a closed structure for temperature maintenance and a flue for exhaust gas is provided.

Fig. 2 shows a plan view of another embodiment of a furnace employed in the present invention. Fresh hot air 1a, 1b, 1c, is fed from one lateral side and hot air 1aʹ, 1bʹ, 1cʹ is midway fed from the opposite lateral side, and it is possible to obtain plate catalysts having a uniform performance in both the length and width directions thereof.

In the above embodiments, the description has referred to plate catalysts units, but the present invention is also applicable to calcination of honeycomb catalyst units.

According to the above embodiments, by using fresh hot air and midway changing over the direction of flow of the hot air, it is possible to carry out uniformly the calcination of the catalyst in the direction of gas flow path, thereby to obtain a suitable content of sulfate groups remaining in the catalyst and obtain catalysts having a uniform performance in the reasonable time.

The invention will be illustrated further by the following Example.

### Example

A catalyst composition consisting of titanium oxide, molybdenum oxide, vanadium oxide and alumina-silicate fibers was press-bonded onto an expanded metal plate to form a catalyst plate. The catalyst plate was then press-formed into a corrugated plate having Z-form projections in cross-section. The resulting catalyst plates were stacked within a frame body to form a catalyst unit having sizes of about 465 x 465 x 560 mm as shown in Fig. 3. The catalyst units were fed onto a reticulate belt as shown in Fig. 1 to carry out calcination. The calcination conditions were as follows:
temperature of fresh hot air 1, 1ʹ: about 500°C, rate of fresh hot air passing through the catalyst units 3: about 0.4 m/sec, and
retention time of the catalyst units within the furnace: about 2.5 hours.

As a result, denitrating catalyst units having a sulfate group content in the catalyst of about 5.5% by weight and an extremely small dispersion of quality were obtained. Further, using the thus obtained catalyst, denitration of exhaust gas was carried out: a good percentage denitration of 61% or higher was obtained and the abrasion loss of the catalyst was also small, i.e. 0.16 g/test piece (100 x 100 mm).

### Comparative Example

Calcination of the same catalyst units as in the above Example was carried out using the same conditions except that fresh hot air was fed in such a way that the direction of passage of the air was the same all along the moving direction of the reticulate belt as shown in Fig. 4.

As a result, denitrating catalyst units having a sulfate group content in the catalyst ranging from about 3 to 8% by weight and a non-uniform quality were obtained. Further, using the thus obtained catalyst, denitration of exhaust gas was carried out: the percentage denitration was 55 to 63%, and the abrasion loss of the catalyst was from 0.12 to 0.25 g/test piece (100 x 100 mm).

In this Comparative Example, when used hot air was recycled instead of using fresh hot air, a retention time of as long as about ten hours was required in order to obtain a catalyst having the same quality as in the Example.

According to the present invention, it is possible to obtain a calcined catalyst having excellent properties such as high percentage denitration, high abrasion resistance, etc. and an efficient process for calcining the catalyst having a short time for calcination, a good catalyst efficiency at the time of catalyst calcination etc.

## Claims

1. A process for calcining a denitrating catalyst, which process comprises arranging denitrating catalyst units (3) on a reticulated belt (4) which is moving continuously through a furnace; passing fresh hot air through the said units (3), the temperature of the hot air being from 350°C to 600°C and the direction of the flow of hot air which is passing through the catalyst units (3) at least at the upstream portion of the reticulated belt (4) being opposite to the direction of the flow of hot air which is passing through the catalyst units (3) at the downstream portion of the reticulated belt (4); and removing the resulting catalyst units (3) from the reticulated belt (4); the sulfate group content in the resultant catalyst being brought to a value of from 4 to 7% by weight, based on the weight of the catalyst, by adjusting the rate of passage of the hot air through the units (3) to a value of from 0.1 to 0.9 m/sec with the retention time of the catalyst units in the furnace being from 1 to 4 hours.

2. A process according to claim 1, wherein the direction of the flow of hot air is reversed from a downward direction to an upward direction or from an upward direction to a downward direction, at the upstream portion and the downstream portion respectively of said reticulated belt (4).

3. A process according to claim 1 or 2, wherein the temperature of the hot air is from 450°C to 550°C.

4. A process according to any one of the preceding claims, wherein the retention time of the denitrating catalyst units passing through the furnace is from 2 to 3 hours.

5. A process according to any one of the preceding claims, wherein the rate of passage of the hot air is from 0.3 to 0.5 m/sec.

6. A process according to any one of the preceding claims, wherein the sulfate group content of the denitrating catalyst is from 5 to 6% by weight, based on the weight of the catalyst.

7. A process according to any one of the preceding claims, wherein the catalyst component of the denitrating catalyst comprises at least one of titanium, vanadium, molybdenum, tungsten and manganese.

8. A process according to any one of the preceding claims, wherein said denitrating catalyst units are units which have been obtained by applying said denitrating catalyst onto the surface of a porous plate support having projections, stacking the resulting plate catalysts by means of said projections and encasing the resulting stacked plate catalysts in a frame body.

## Patentansprüche

1. Verfahren zur Kalzinierung eines Denitrierungskatalysators, bei welchem die Denitrierungs-Katalysatoreinheiten (3) auf einem netzförmigen Band (4) angeordnet werden, das sich kontinuierlich durch einen Ofen bewegt; frische Heißluft durch die Einheiten (3) geleitet wird, wobei die Temperatur der Heißluft Zwischen 350°C und 600°C liegt, und die Strömungsrichtung der durch die Katalysatoreinheiten (3) wenigstens im Anfangsteil des netzförmigen Bandes (4) geleiteten Heißluft der Strömungsrichtung der durch die Katalysatoreinheiten (3) im Endteil des netzförmigen Bandes (4) geleiteten Heißluft entgegengesetzt ist; und die erhaltenen Katalysatoreinheiten (3) vom netzförmigen Band (4) abgenommen werden; wobei der Sulfatgruppengehalt im erhaltenen Katalysator auf einen Wert Zwischen 4 und 7 Gew.-%, beruhend auf dem Gewicht des Katalysators, gebracht wird, indem die Menge der durch die Einheiten (3) geleiteten Heißluft auf einen Wert Zwischen 0,1 und 0,9 m/s bei einer Aufenthaltszeit der Katalysatoreinheit im Ofen Zwischen 1 und 4 Stunden eingestellt wird.

2. Verfahren nach Anspruch 1, bei dem die Strömungsrichtung der Heißluft von einer Richtung nach unten in eine Richtung nach oben oder von einer Richtung nach oben in eine Richtung nach unten jeweils im anfänglichen Teil bzw. im Endteil des netzförmigen Bandes (4) umgekehrt wird.

3. Verfahren nach Anspruch 1 oder 2, bei dem die Temperatur der Heißluft zwischen 450°C und 550°C liegt.

4. Verfahren nach einem der vorangehenden Ansprüche, bei dem die Aufenthaltszeit der Denitrierungs-Katalysatoreinheiten, welche durch den Ofen geleitet werden, zwischen 2 und 3 Stunden beträgt.

5. Verfahren nach einem der vorangehenden Ansprüche, bei dem die Menge der durchgeleiteten Heißluft 0,3 bis 0,5 m/s beträgt.

6. Verfahren nach einem der vorangehenden Ansprüche, bei dem der Sulfatgruppengehalt des Denitirierungskatalysators zwischen 5 und 6 Gew.-%, beruhend auf dem Gewicht des Katalysators, beträgt.

7. Verfahren nach einem der vorangehenden Ansprüche, bei dem die Katalysatorkomponente des Denitrierungskatalysators wenigstens einen der Stoffe Titan, Vanadium, Molybdän, Wolfram und Mangan aufweist.

8. Verfahren nach einem der vorangehenden Ansprüche, bei dem die Denitrierungs-Katalysatoreinheiten derartige Einheiten sind, die durch Aufbringen des Denitrierungskatalysators auf die Oberfläche einer porösen Plattenunterlage mit Vorsprüngen, Stapeln der erhaltenen Plattenkatalysatoren mittels der Vorsprünge und Einschließen der erhaltenen gestapelten Plattenkatalysatoren in einem Rahmenkörper erhalten worden sind.

## Revendications

1. Procédé de calcination d'un catalyseur de dénitrification, comprenant la mise en place d'unités (3) de catalyseur de dénitrification sur une bande réticulée (4) qui se déplace en continu dans un four ; le passage d'air chaud nouveau dans lesdites unités (3), la température de l'air chaud étant de 350°C à 600°C et la direction d'écoulement de l'air chaud qui traverse les unités de catalyseur (3) au moins dans la partie située en amont de la bande réticulée (4) étant opposée à la direction d'écoulement de l'air chaud qui traverse les unités de catalyseur (3) dans la partie située en aval de la bande réticulée (4) ; et le retrait des unités de catalyseur (3) résultantes de la bande réticulée (4) ; la teneur en groupes sulfatés dans le catalyseur résultant étant amenée à une valeur comprise entre 4 et 7 % en poids, sur la base du poids du catalyseur, grâce à un réglage de la vitesse de passage de l'air chaud dans les unités (3) à une valeur comprise entre 0,1 et 0,9 m/s, le temps de séjour des unités de catalyseur dans le four étant de 1 à 4 heures.

2. Procédé selon la revendication 1, dans lequel la direction de l'écoulement de l'air chaud est inversée, passant d'une direction descendante à une direction ascendante ou d'une direction ascendante à une direction descendante, respectivement dans la partie située en amont et dans la partie située en aval de ladite bande réticulée (4).

3. Procédé selon la revendication 1 ou 2, dans lequel la température de l'air chaud est de 450°C à 550°C.

4. Procédé selon l'une quelconque des revendications précédentes, dans lequel le temps de séjour des unités de catalyseur de dénitrification passant dans le four est de 2 à 3 heures.

5. Procédé selon l'une quelconque des revendications précédentes, dans lequel la vitesse de passage de l'air chaud est de 0,3 à 0,5 m/s.

6. Procédé selon l'une quelconque des revendications précédentes, dans lequel la teneur en groupes sulfatés du catalyseur de dénitrification est de 5 à 6 % en poids, sur la base du poids du catalyseur.

7. Procédé selon l'une quelconque des revendications précédentes, dans lequel le composant catalyseur du catalyseur de dénitrification comprend au moins un des éléments suivants : titane, vanadium, molybdène, tungstène et manganèse.

8. Procédé selon l'une quelconque des revendications précédentes, dans lequel lesdites unités de catalyseur de dénitrification sont des unités qu'on obtient en appliquant ledit catalyseur de dénitrification à la surface d'une plaque poreuse de support ayant des saillies, en empilant les catalyseurs en plaque résultants au moyen desdites saillies et en encastrant les catalyseurs en plaque empilés résultants dans un élément à cadre.
